# EUROPÄISCHE PATENTSCHRIFT

(11) **EP 2 699 872 B1**
(45) Veröffentlichungstag und Bekanntmachung des Hinweises auf die Patenterteilung: **26.08.2015**
(21) Anmeldenummer: 12714599.3
(22) Anmeldetag: 20.03.2012
(51) Int. Cl.: G01B 7/02, B23D 59/00

(54) **MESSEINRICHTUNG FÜR EINE ROHRSCHNEIDEMASCHINE**
MEASURING DEVICE FOR A PIPE CUTTING MACHINE
DISPOSITIF DE MESURE POUR UNE MACHINE À COUPER LES TUBES

(30) Priorität: 20.04.2011 DE 102011018297
(43) Veröffentlichungstag der Anmeldung: 26.02.2014
(73) Patentinhaber: Rattunde & Co GmbH, 19288 Ludwigslust (DE)
(72) Erfinder: RATTUNDE, Ulrich, 19322 Bentwisch (DE)
(74) Vertreter: Groth, Wieland
(86) Internationale Anmeldenummer: PCT/EP2012/054926
(87) Internationale Veröffentlichungsnummer: WO 2012/143194

(56) Entgegenhaltungen:
- DE-A1-102006 025 506
- DE-A1-102007 008 887

## Beschreibung

Die Erfindung betrifft eine Messeinrichtung gemäß dem Oberbegriff des Anspruchs 1.

Messeinrichtungen sind insbesondere als Bauteile integrierter Rohrschneidemaschinen zur Nachprüfung der Länge abgelängter Rohrabschnitte von einem insbesondere metallischen Hohl- oder Vollprofil im Stand der Technik bekannt.

Aus der DE 10 2006 025506 B4 ist beispielsweise eine Messvorrichtung zur gleichzeitigen Prüfung der Länge von Rohrabschnitten eines Bündels bekannt. Dabei ist in einem Messschenkel eine Mehrzahl von Messstempeln angeordnet.

Nachteilig an diesen Messstempeln ist die relativ schnell eintretende Gefahr einer Selbsthemmung.

Darüber hinaus sind aus der DE 10 2007 008 887 B4 Messschenkel mit einer in dem Material integriert ausgebildeten Messstempelanordnung bekannt. Diese gelenkfreien Messstempel sind frei von Selbsthemmungen, beeinflussen jedoch auch wegen der Veränderung der Materialeigenschaften über die gesamte Lebensdauer der Anordnung die Messergebnisse.

Es ist daher Aufgabe der Erfindung, eine verbesserte Messeinrichtung zur Verfügung zu stellen.

Die Aufgabe wird durch eine eingangs genannte Messeinrichtung mit den Merkmalen des Anspruchs 1 erfüllt. Bevorzugte Ausführungsformen sind in den abhängigen Ansprüchen dargestellt.

Die erfindungsgemäße Messeinrichtung weist zwei sich gegenüberliegende Messschenkel auf, die gegeneinander verfahrbar sind, wobei in wenigstens einem der Messschenkel eine Linearführung ausgebildet ist. Die Linearführung weist einen Messstempel als Führungselement und einen zugehörigen Messstempel-Führungskanal auf. Der Messstempel ist zur hochpräzisen Prüfung der Länge von von einer Schneidemaschine von einem stangenförmigen Profilmaterial abgelängten Abschnitten, vorzugsweise metallische Rohrabschnitte oder metallische Vollprofilabschnitte, bestimmt.

Die Messvorrichtung ist zur gleichzeitigen Prüfung der Länge von wenigstens zwei im Wesentlichen gleichlangen abgelängten Abschnitten eines stangenförmigen Profilmaterials vorgesehen. Dabei sind zwei sich gegenüberliegende Messschenkel vorgesehen, zwischen denen die wenigstens zwei Abschnitte in Führungsrichtung nebeneinander und vorzugsweise in einem in vorgegebener Weise gestapelten Bündel auf einer Aufnahme positionierbar sind. Es ist eine Verfahreinrichtung für wenigstens einen der beiden Messschenkel vorgesehen, mit der der Abstand zwischen den beiden Messschenkeln verringerbar ist. Wenigstens einer der Messschenkel weist mindestens einen in Führungsrichtung ausgerichteten Messstempel auf, der mit einer oben genannten Linearführung im Messschenkel verfahrbar ist. Jedem der Abschnitte ist genau ein Messstempel zugeordnet, und jeder der Abschnitte berührt während der Messung mit einem Ende genau einen der Messstempel des einen Messschenkels und mit dem anderen Ende den anderen gegenüberliegenden Messschenkel.

Es wird eine Messeinrichtung mit einer Linearführung vorgeschlagen mit einem Führungskanal und einem Führungselement, das in dem Führungskanal über eine Führungslänge hin und her verfahrbar ist. Aufgrund eines umlaufenden Spaltes weist das Führungselement im Führungskanal ein Spiel auf. Die Linearführung ist insbesondere für eine Messeinrichtung einer Rohrschneidemaschine vorgesehen.

Wenn der Quotient aus Durchmesser des Führungselementes im Verhältnis zur Führungslänge des Führungselementes ein vom Reibungskoeffizienten zwischen Führungskanal und Führungselement abhängigen bestimmten Wert überschreitet, blockiert die Linearführung zwangsläufig. Dieser Vorgang wird als Selbsthemmung bezeichnet. Die Selbsthemmung ist allgemein bekannt und wird herkömmlicherweise mit entsprechend langen Führungen verhindert.

Die Erfindung macht auch von der Idee Gebrauch, auf die Außenwandung des Führungskanals, die hier als Makroprofil bezeichnet wird, ein Mikroprofil aufzubringen, das ein deutlich günstigeres Verhältnis von Durchmesser zu Führungslänge des Führungselementes aufweist und das dadurch einer Selbsthemmung entgegenwirkt.

Erfindungsgemäß sind dazu auf der Außenwandung des Führungselementes senkrecht zur Führungsrichtung umlaufend um den Querschnitt herum Aus- und/oder Einbuchtungen vorgesehen, die jeweils in Führungsrichtung länglich ausgebildet und ausgerichtet sind mit weiteren Führungslängen und weiteren Führungsbreiten, wobei die weiteren Breiten/Längenverhältnisse kleiner als das erste Breiten/Längenverhältnis des Führungselementes sind. Vorzugsweise sind die weiteren Breiten/Längenverhältnisse kleiner als ein Zehntel, besonders bevorzugt kleiner als ein 15tel des ersten Breiten/Längenverhältnisses.

Besonders bevorzugt weisen die weiteren Ausbuchtungen und die weiteren Einbuchtungen alle dasselbe Breiten/Längenverhältnis auf. Dadurch ist das Mikroprofil besonders kostengünstig auf der Außenwandung des Führungselementes aufbringbar und herstellbar.

Die Ausgestaltung des Querschnittes des Führungselementes und / oder die Ausgestaltung des Querschnittes der Ein- und/oder Ausbuchtungen des Mikroprofils können vielfältig sein. Günstigerweise ist der Querschnitt sowohl des Führungselementes als auch der Ein- und/oder Ausbuchtungen über die gesamte jeweilige Führungslänge gleichbleibend ausgeformt.

In einer bevorzugten Ausbildungsform der Erfindung ist der Querschnitt des Führungselementes im Wesentlichen rechteckig oder quadratisch ausgebildet. Die sich bildenden vier Außenwandungen des Führungselementes sind besonders bevorzugt mit in Führungsrichtung verlaufenden Ein- und/oder Ausbuchtungen versehen, die im Querschnitt senkrecht zur Führungsrichtung vorzugsweise halbkreisförmig ausgebildet sind. Es sind jedoch auch trapezförmige, rechteckförmige, quadratische Querschnitte denkbar. Die Querschnitte der einzelnen Aus- und/oder Einbuchtungen können untereinander unterschiedlich sein. Entscheidend ist lediglich, dass das Breiten/Führungslängenverhältnis der Aus- und/oder Einbuchtungen kleiner, vorzugsweise deutlich, d. h. weniger als ein Zehntel, kleiner als das Breiten/Führungslängenverhältnis des Führungselementes selbst ist.

Die Erfindung wird anhand eines Ausführungsbeispiels in vier Figuren beschrieben. Dabei zeigen:
- Fig. 1: schematische Seitenansicht einer erfindungsgemäßen Messeinrichtung für mehrere abgelängte Rohrabschnitte,
- Fig. 2: perspektivische Ansicht des Messschenkels mit Messstempeln in Fig. 1,
- Fig. 3: Vorderansicht des Messstempels in Fig. 2,
- Fig. 4: perspektivische Ansicht einer der vier Messstempel in den Fig. 1 - 3.

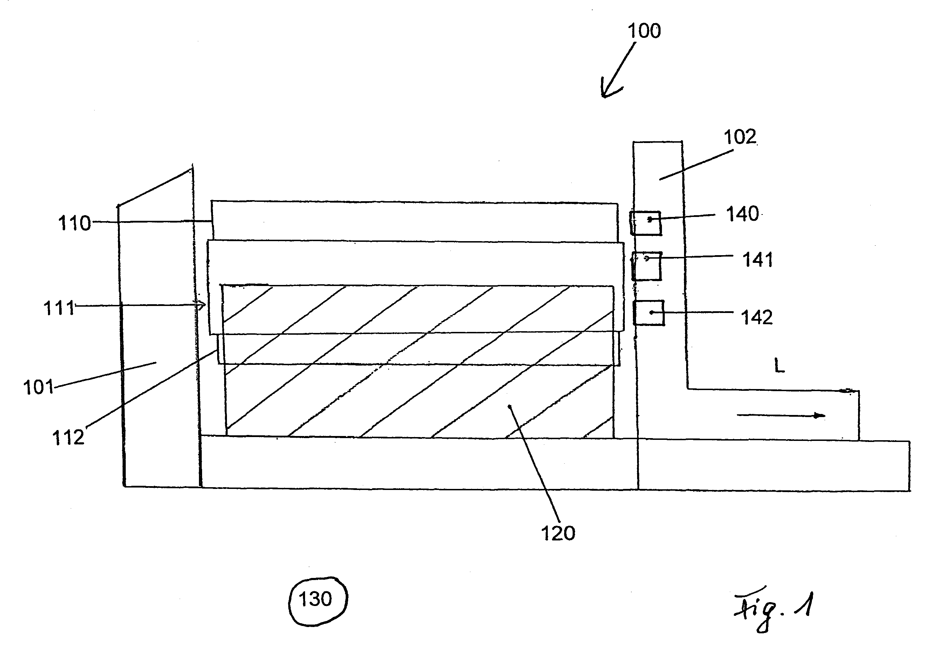

Fig. 1 zeigt eine Messeinrichtung 100 mit sich gegenüberliegenden Messschenkeln 101, 102, die in einem veränderbaren lichten Abstand d voneinander angeordnet sind. Zwischen den beiden Messschenkeln 101, 102 kann eine Mehrzahl, hier bis zu vier, Rohrabschnitte 110, 111, 112, 113 von im Wesentlichen gleicher Länge aufgenommen werden. Die Rohrabschnitte können mittels der Messeinrichtung 100 gleichzeitig in ihrer jeweiligen Länge hochpräzise vermessen werden.

Zum Ablängen der metallischen Rohrabschnitte 110, 11, 112, 113 von einem (nicht dargestellten) Metallrohr ist eine integrierte Rohrschneidemaschine vorgesehen. Die abgelängten Rohrabschnitte 110, 11, 112, 113 werden nach dem Ablängen einer Nachbehandlung, beispielsweise in Form von Anfasen, Entgraten, Waschen usw. unterworfen. Die Kundenanforderungen an die Längenpräzision sind hoch. Beispielsweise müssen Rohrabschnitte 110, 111, 112, 113 von einer Länge von 0,5 m bei einer Toleranz von 0,1 mm eine Prozessfähigkeit von CPK = 1,33 erfüllen, mit anderen Worten: 99,994 % aller Rohrabschnitte 110, 111, 112, 113 müssen innerhalb der genannten Toleranz liegen. Natürlich weisen die Rohrabschnitte 110, 111, 112, 113 nach dem Ablängen eine im Wesentlichen gleiche Länge auf. Da jeder Schneidvorgang jedoch geringfügigen Ungenauigkeiten unterworfen ist, muss die Länge der Abschnitte nach jedem Ablängen im Rahmen der obigen Genauigkeit geprüft werden, um die oben genannten Standards zu gewährleisten.

Die Messvorrichtung 100 weist eine prismatische Aufnahme 120 für bis zu vier im Wesentlichen gleich lange Rohrabschnitte 110, 111, 112, 113 auf. Dazu wird ein Bündel von bis zu vier, im Wesentlichen jeweils gleich langen Rohrabschnitten 110, 11, 112, 113 auf die im Querschnitt senkrecht zu der in Fig. 1 dargestellten Ebene prismatisch ausgeformten Aufnahme 120 mittels eines (nicht dargestellten) Greifarmes positioniert. Die gestapelte Anordnung der Rohrabschnitte 110, 111, 112, 113 innerhalb eines Viererbündels ist bei jedem Greif-, Einlege-, und Messzyklus die gleiche. Der Winkel der prismatischen Aufnahme 120 sowie der Durchmesser der Rohrabschnitte 110, 111, 112, 113 sind aufeinander abgestimmt und erzwingen so, selbst bei einem nur mehr oder weniger exakt wiederholten Beladen der Aufnahme 120 mit vier Rohrabschnitten 110, 111, 112, 113, eine immer gleichbleibende Positionierung der Rohrabschnitte 110, 111, 112, 113 innerhalb des Bündels in der Aufnahme 120. Die Messvorrichtung 1 weist einen gegenüber dem Erdboden 130 oder der Rohrschneidemaschine feststehenden, also positionsfesten Messschenkel 101 und eine gegenüber dem Erdboden 130 bzw. der Rohrschneidemaschine verfahrbaren Messschenkel 102 auf. Oberhalb der prismatischen Aufnahme 120 sind hier am verfahrbaren Messschenkel 110, 111, 112, 113 vier Messstempel 140, 141, 142, 143 vorgesehen. Die Messstempel 102 sind in dem verfahrbaren Messschenkel 102 selbst relativ zu ihm elastisch hin und her verfahrbar. Eine Eindrücktiefe der Messstempel 140, 141, 142, 143 in den Messschenkel 102 wird mittels eines induktiven Wegmesssystems bestimmt. Das induktive Messsystem misst die Eindringtiefe des Messstempels 140, 141, 142, 143 in den Messschenkel 102 bis auf 0,001 mm genau. Die Messdaten werden einer (nicht dargestellten) elektronischen Auswerteeinheit zugeführt. Jeder der Messstempel 140, 141, 142, 143 ist in einem Messstempelkanal 170, 171, 172, 173 in Führungsrichtung L hin und her verfahrbar angeordnet. Dabei weist jeder der Messstempel 140, 141, 142, 143 ein Spiel in seinem Messstempelkanal 170, 171 712, 173 auf.

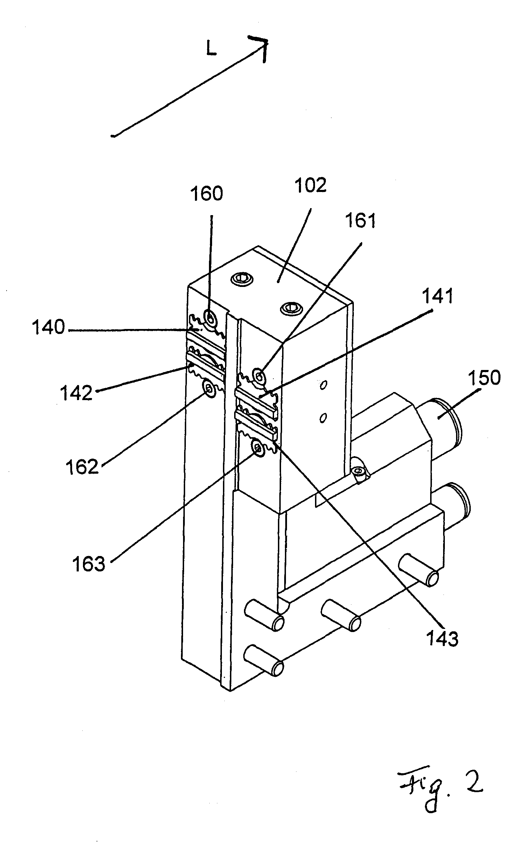

Fig. 2 zeigt den verfahrbaren Messschenkel 102 in Fig. 1 in einer perspektivischen Ansicht. Die vier Messstempel 140, 141, 142, 143 sind versetzt zueinander an der der prismatischen Aufnahme 120 zugewandten Seite angeordnet.

Fig. 2 zeigt den in Fig. 1 schematisch dargestellten Messschenkel 102 in einer perspektivischen Ansicht. Er weist einen Druckluftanschluss 150 auf, über den Druckluft über einen Druckluftkanal auf die Innenseite jeder der Messstempel 140, 141, 142, 143 geleitet wird. Die Druckluft setzt jeden der vier Messstempel 140, 141, 142, 143 unter eine elastische Vorspannung, die jeden der vier Messstempel 140, 141, 142, 143 in Richtung der prismatischen Auflage nach außen drückt.

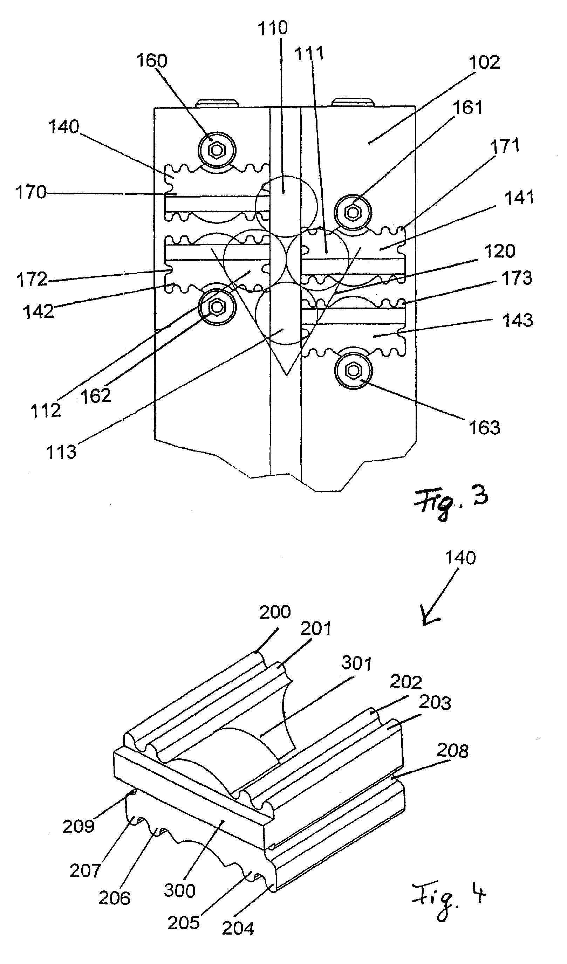

An jedem der vier Messstempel 140, 141, 142, 143 ist eine Ausfahrbegrenzung in Form einer in die Außenseite des Messschenkels 102 eingedrehten, den jeweiligen Messstempel 140, 141, 142, 143 hintergreifenden Schraube 160, 161, 162, 163 vorgesehen. Im ausgefahrenen Zustand ist jeder der Messstempel 140, 141, 142, 143 auf null geeicht. Nach dem Einlegen eines Viererbündels liegen die Rohrabschnitte 110, 111, 112, 113, wie in Fig. 3 gezeigt, an den vier Messstempeln 140, 141, 142, 143 an. Dabei kommt jeder der Rohrabschnitte 110, 111, 112, 113 mit genau einem und nur einem Messstempel 140, 141, 142, 143 in Kontakt. Nach dem Einlegen der vier Rohrabschnitte 110, 111, 112, 113 in die prismatische Aufnahme 120, die in Fig. 3 ebenfalls schematisch dargestellt ist, wird der Messschenkel 102 an die prismatische Aufnahme 120 herangefahren, und zwar so lange, bis jeder der vier Rohrabschnitte 110, 111, 112, 113 mit seiner dem verfahrbaren Messschenkel 102 zugewandten Seite in Kontakt mit dem ihm zugeordneten Messstempel 140, 141, 142, 143 kommt. In diesem Moment kann die Länge jeder der vier Rohrabschnitte 110, 111, 112, 113 mit der oben genannten Exaktheit bestimmt werden.

Fig. 3 zeigt auch, dass die Enden der Rohrabschnitte 110, 111, 112, 113 die Messstempel 140, 141, 142, 143 in der Regel nicht mittig und zentral berühren, sondern seitlich am Rand. Da jeder der Messstempel 140, 141, 142, 143 ein Spiel in seinem Messstempelkanal 170, 171, 172, 173 aufweist, verkippt der Messstempel 140, 141, 142, 143 durch den dezentral auf ihn ausgeübten Druck in dem Messstempelkanal 170, 171, 172, 173 nur noch leicht. Die erfindungsgemäßen Messstempel 140, 141, 142, 143 weisen jeweils acht Ausbuchtungen 200, 201, 202, 203, 204, 205, 206, 207 und jeweils zwei Einbuchtungen 208, 209 auf. Die Aus- und Einbuchtungen 200,201, 202, 203, 204, 205, 206, 207, 208, 209 stabilisieren die Hin-und-her-Bewegung in dem jeweiligen Messstempelkanal 170, 171, 172, 173 erheblich, insbesondere wird eine Selbsthemmung vollständig verhindert.

Fig. 4 zeigt einen der vier Messstempel 140, 141, 142, 143 in einer perspektivischen Ansicht. Jeder der Messstempel 140, 141, 142, 143 muss ein Spiel in dem Messstempel-Führungskanal 170, 171, 712, 173 aufweisen, um überhaupt verfahrbar zu bleiben. Der umlaufende Spalt wird ständig durch die innenseitig auf jeden der Messstempel 140, 141, 142, 143 ausgeübte Druckluft von Verunreinigungen gereinigt. Problematisch an dem Spalt ist bei dezentraler Kraftausübung die Verkippung des Messstempels 140, 141, 142, 143 in dem Messstempel-Führungskanal 170, 171, 172, 173 und die dadurch gegebenenfalls auftretende Selbsthemmung.

Bei zylindrischen Messstempel-Führungskanälen 170, 171, 172, 173 leitet sich die Selbsthemmung aus dem Verhältnis zwischen Durchmesser des Messstempel 140, 141, 142, 143 Führungskanals 170, 171, 172, 173 zur Führungslänge des Messstempel-Führungskanals 170, 171, 172, 173 ab. Überschreitet der Quotient Durchmesser / Führungslänge einen vom Reibungskoeffizienten abhängigen bestimmten Wert, blockiert der Messstempel 140, 141, 142, 143 im Führungskanal 170, 171, 172, 173 zwangsläufig. Dieses ist die oben genannte Selbsthemmung. Üblicherweise wird dieses Problem mit entsprechend langen Führungen im Verhältnis zum Durchmesser des Messstempels verhindert. Aufgrund von z. B. Kunden- oder anderweitigen technischen Anforderungen werden geringe Bautiefen der Messschenkel 102 angeregt, die eine möglichst kurze Führungslänge bedingen. Die Selbsthemmung wird dadurch geradezu provoziert. Die Messstempel 140, 141, 142, 143 hier können aufgrund der Aus- und Einbuchtungen 200, 201, 202, 203, 204, 205, 206, 207, 208, 209 aber sehr kurz gehalten werden und dennoch nicht im Führungskanal verklemmen.

Die Messstempel 140, 141, 142, 143 in Fig. 4 weisen dazu auf der oberen, dem Erdboden 130 abgewandten und auf der unteren, dem Erdboden zugewandten Außenwandung im Querschnitt senkrecht zur Führungsrichtung L halbkreisförmige Ausbuchtungen 200, 201, 202, 203, 204, 205, 206, 207 auf und an ihren beiden seitlichen Wandungen je eine Einbuchtung 208, 209, die im Querschnitt senkrecht zur Führungsrichtung L ebenfalls halbkreisförmig ausgebildet sind.

Aus- bzw. Einbuchtungen umlaufen den Messstempel vollständig und in im Wesentlichen gleichen Abständen voneinander. Das durch die Aus- bzw. Einbuchtungen entstehende Mikroprofil auf der ein Makroprofil ausbildenden ursprünglich rechteckigen Außenwandung des Messstempels 140, 141, 142, 143 ist nunmehr für die Selbsthemmung des Messstempels 140, 141, 142, 143 verantwortlich. Aufgrund des ausgesprochen geringen Durchmessers jeder der Ausbuchtungen 200, 201, 202, 203, 204, 205, 206, 207 im Querschnitt im Verhältnis zur gleichbleibenden Längsausdehnung der Ausbuchtungen 200, 201, 202, 203, 204, 205, 206, 207 entsteht ein deutlich geringerer Durchmesser / Führungslängen Quotient des Mikroprofils gegenüber dem Makroprofil der Messstempel 140, 141, 142, 143, der eine Selbsthemmung verhindert.

Der in Fig. 4 dargestellte Messstempel 140 weist an seiner der prismatischen Aufnahme 120 zugewandten Seite eine Anlagefläche 300 für den Rohrabschnitt 110 auf und auf seiner Innenseite eine Sensormessfläche 301, die als Messfläche des (nicht dargestellten) induktiven Wegmesssystems fungiert.

### Bezugszeichenliste

- 100: Messeinrichtung
- 101: Messschenkel
- 102: Messschenkel

- 110: abgelängter Rohrabschnitt
- 111: abgelängter Rohrabschnitt
- 112: abgelängter Rohrabschnitt
- 113: abgelängter Rohrabschnitt

- 120: prismatische Aufnahme
- 130: Erdboden

- 140: Messstempel
- 141: Messstempel
- 142: Messstempel
- 143: Messstempel

- 150: Luftdruckzufuhr

- 160: eingedrehte Schraube
- 161: eingedrehte Schraube
- 162: eingedrehte Schraube
- 163: eingedrehte Schraube

- 170: Messstempelkanal
- 171: Messstempelkanal
- 172: Messstempelkanal
- 173: Messstempelkanal

- 200: Ausbuchtung
- 201: Ausbuchtung
- 202: Ausbuchtung
- 203: Ausbuchtung
- 204: Ausbuchtung
- 205: Ausbuchtung
- 206: Ausbuchtung
- 207: Ausbuchtung
- 208: Einbuchtung
- 209: Einbuchtung

- 300: Anlagefläche
- 301: Sensormessfläche

- d: lichter Abstand

- L: Führungsrichtung

## Patentansprüche

1. Messeinrichtung zur präzisen Bestimmung der Länge wenigstens eines Langprofils zwischen zwei sich gegenüberliegenden Messschenkeln (101, 102) mit zwei sich gegenüberliegenden Messschenkeln (101, 102) und
einem mittels einer Linearführung in einem der Messschenkel (101, 102) verfahrbaren Messstempel (140, 141, 142, 143), wobei das Langprofil zur Anlage mit einem Ende an dem Messstempel (140, 141, 142, 143) positionierbar ist,
**dadurch gekennzeichnet, dass**
die Linearführung einen in einer Führungsrichtung (L) ausgebildeten Führungskanal und ein Führungselement mit einer Außenwandung aufweist, das entlang der Führungsrichtung (L) in dem Führungskanal hin und her verfahrbar ist, und das Führungselement eine erste Führungslänge und eine erste Führungsbreite aufweist und ein erstes Führungsbreiten/Führungslängen Verhältnis ausbildet und an der Außenwandung des Führungselementes
in einem Querschnitt senkrecht zur Führungsrichtung (L) umlaufend in Führungsrichtung (L) ausgerichtete Aus- und/oder Einbuchtungen (200, 201, 202, 203, 204, 205, 206, 207, 208, 209) vorgesehen sind mit jeweils einer weiteren Führungslänge und einer weiteren Führungsbreite und jeweils einem weiteren Führungsbreiten/Führungslängen Verhältnis und dadurch, dass die weiteren Führungsbreiten/Führungslängen Verhältnisse kleiner als das erste Führungsbreiten/Führungslängen Verhältnis sind.

2. Messeinrichtung nach Anspruch 1,
**gekennzeichnet durch** eine Luftdruckzufuhr an der der Anlage abgewandten Seite des Messstempels (140, 141, 142, 143), **durch** die der Messstempel (140, 141, 142, 143) gegen die Anlage drückbar ist und einen den Messstempel (140, 141, 142, 143) umlaufenden Spalt, **durch** den die Druckluft zur Anlage herausströmt.

3. Messeinrichtung nach Anspruch 1 oder 2,
**dadurch gekennzeichnet, dass** die weiteren Führungsbreiten/Führungslängen Verhältnisse untereinander gleich sind.

4. Messeinrichtung nach Anspruch 1, 2 oder 3,
**dadurch gekennzeichnet, dass** eine Vielzahl von in Führungsrichtung (L) verlaufenden Aus- und/oder Einbuchtungen (200, 201, 202, 203, 204, 205, 206, 207, 208, 209) an der Außenwandung vorgesehen sind mit jeweils einer weiteren Führungslänge und einer weiteren Führungsbreite.

5. Messeinrichtung nach wenigstens einem der Ansprüche 1 bis 4,
**dadurch gekennzeichnet, dass** das Führungselement ohne die Aus- und Einbuchtungen (200, 201, 202, 203, 204, 205, 206, 207, 208, 209) in einem Querschnitt senkrecht zur Führungsrichtung (L) im Wesentlichen rechteckig ausgebildet ist.

6. Messeinrichtung nach wenigstens einem der Ansprüche 1 bis 5,
**dadurch gekennzeichnet, dass** das zweite Führungsbreiten/Führungslängen Verhältnis kleiner als ein Zehntel, vorzugsweise kleiner als ein 15tel des ersten Führungsbreiten/Führungslängen Verhältnisses ist.

7. Messeinrichtung nach wenigstens einem der Ansprüche 1 bis 6,
**dadurch gekennzeichnet, dass** Ausbuchtungen (200, 201, 202, 203, 204, 20, 206, 207) im Querschnitt senkrecht zur Führungsrichtung (L) im Wesentlichen halbkreisförmig sind.

## Claims

1. A measuring device for the precise determination of the length of at least one elongate profile between two mutually opposed measuring arms (101, 102) with two mutually opposed measuring arms (101, 102) and a measuring stamp (140, 141, 142, 143) movable in one of the measuring arms (101, 102) by means of a linear guide, wherein the elongate profile is capable of being positioned for abutment with one end on the measuring stamp (140, 141, 142, 143), **characterized in that** the linear guide has a guide channel formed in a guiding direction (L) and a guide element with an outer wall which is movable in a reciprocating manner in the guide channel along the guiding direction (L), and the guide element has a first guide length and a first guide width and forms a first guide width/guide length ratio and protrusions and/or indentations (200, 201, 202, 203, 204, 205, 206, 207, 208, 209) orientated in a circumferential manner in the guiding direction (L) in a cross-section at a right angle to the guiding direction (L) and with each one further guide length and one further guide width and each one further guide width/guide length ratio are provided on the outer wall of the guide element, and **in that** the further guide width/guide length ratios are smaller than the first guide width/guide length ratio.

2. A measuring device according to Claim 1, **characterized by** a compressed-air supply on the side of the measuring stamp (140, 141, 142, 143) facing away from the support, by which the measuring stamp (140, 141, 142, 143) is capable of being pressed against the support, and a gap which surrounds the measuring stamp (140, 141, 142, 143) and through which the compressed air flows out to the support.

3. A measuring device according to Claim 1 or 2, **characterized in that** the further guide width / guide length ratios are the same between themselves.

4. A measuring device according to Claim 1, 2 or 3, **characterized in that** a plurality of protrusions and/or indentations (200, 201, 202, 203, 204, 205, 206, 207, 208, 209) extending in the guiding direction (L) are provided on the outer wall and each have one further guide length and one further guide width.

5. A measuring device according to at least one of Claims 1 to 4, **characterized in that** the guide element without the protrusions and indentations (200, 201, 202, 203, 204, 205, 206, 207, 208, 209) is made substantially rectangular in a cross-section at a right angle to the guiding direction (L).

6. A measuring device according to at least one of Claims 1 to 5, **characterized in that** the second guide width / guide length ratio is smaller than a tenth, and preferably smaller than a 15th, of the first guide width / guide length ratio.

7. A measuring device according to at least one of Claims 1 to 6, **characterized in that** protrusions (200, 201, 202, 203, 204, 205, 206, 207) are substantially semi-circular in the cross-section at a right angle to the guiding direction (L).

## Revendications

1. Dispositif de mesure pour la détermination précise de la longueur d'au moins un profil longitudinal entre deux branches de mesure (101, 102) situées l'une en face de l'autre avec deux branches de mesure (101, 102) situées l'une en face de l'autre et un étançon de mesure (140, 141, 142, 143) déplaçable au moyen d'un guidage linéaire dans l'une des branches de mesure (101, 102), le profil longitudinal pouvant être positionné pour l'appui avec une extrémité sur l'étançon de mesure (140, 141, 142, 143),
**caractérisé en ce que** le guidage linéaire présente un canal de guidage configuré dans une direction de guidage (L) et un élément de guidage avec une paroi extérieure qui est déplaçable en va-et-vient dans le canal de guidage le long de la direction de guidage (L) et l'élément de guidage présente une première longueur de guidage et une première largeur de guidage et forme un premier rapport de largeurs de guidage/longueurs de guidage et des courbures vers l'extérieur et/ou des courbures vers l'intérieur (200, 201, 202, 203, 204, 205, 206, 207, 208, 209) sont prévues tout autour sur la paroi extérieure de l'élément de guidage, orientées dans la direction de guidage (L) dans une section transversale perpendiculaire à la direction de guidage (L), avec respectivement une autre longueur de guidage et une autre largeur de guidage et respectivement un autre rapport largeurs de guidage/longueurs de guidage et **en ce que** les autres rapports largeurs de guidage/longueurs de guidage sont plus petits que le premier rapport largeurs de guidage/longueurs de guidage.

2. Dispositif de mesure selon la revendication 1, **caractérisé par** une amenée de pression d'air sur le côté de l'étançon de mesure (140, 141, 142, 143) qui est opposé à l'appui par laquelle l'étançon de mesure (140, 141, 142, 143) peut être appuyé contre l'appui et par une fente entourant l'étançon de mesure (140, 141, 142, 143) par laquelle l'air comprimé sort en s'écoulant vers l'appui.

3. Dispositif de mesure selon la revendication 1 ou 2, **caractérisé en ce que** les autres rapports largeurs de guidage/longueurs de guidage sont pareils les uns aux autres.

4. Dispositif de mesure selon la revendication 1, 2 ou 3, **caractérisé en ce qu'**une multitude de courbures vers l'extérieur et/ou des courbures vers l'intérieur (200, 201, 202, 203, 204, 205, 206, 207, 208, 209) dans la direction de guidage (L) sont prévues sur la paroi extérieure avec respectivement une autre longueur de guidage et une autre largeur de guidage.

5. Dispositif de mesure selon au moins l'une des revendications 1 à 4, **caractérisé en ce que** l'élément de guidage sans les courbures vers l'extérieur et/ou les courbures vers l'intérieur (200, 201, 202, 203, 204, 205, 206, 207, 208, 209) est configuré substantiellement rectangulaire dans une section transversale perpendiculaire à la direction de guidage (L).

6. Dispositif de mesure selon au moins l'une des revendications 1 à 5, **caractérisé en ce que** le second rapport largeurs de guidage/longueurs de guidage est plus petit qu'un dixième, de préférence plus petit qu'un quinzième du premier rapport largeurs de guidage/longueurs de guidage.

7. Dispositif de mesure selon au moins l'une des revendications 1 à 6, **caractérisé en ce que** des courbures vers l'extérieur (200, 201, 202, 203, 204, 205, 206, 207 sont substantiellement en forme de demi-cercle en section transversale perpendiculaire à la direction de guidage (L).
